# EUROPEAN PATENT SPECIFICATION

(11) **EP 1 026 395 B1**
(45) Date of publication and mention of the grant of the patent: **31.03.2004**
(21) Application number: 00200366.3
(22) Date of filing: 03.02.2000
(51) Int. Cl.: F02P 5/15

(54) **Ignition timing control method and system for an internal combustion engine**
Zündzeitpunktsteuersystem und Verfahren für Brennkraftmaschine
Méthode et système de commande de l'instant d'allumage pour un moteur à combustion interne

(30) Priority: 05.02.1999 JP 2877999
(43) Date of publication of application: 09.08.2000
(73) Proprietor: Mitsuba Corporation, Kiryu-shi, Gunma-ken (JP)
(72) Inventor: Inaba, Mitsunori, Ashikaga-shi, Tochigi-ken (JP); Nozue, Yutaka, Nitta-gun, Gunma-ken (JP)
(74) Representative: Schmitz, Jean-Marie

(56) References cited:
- US-A- 4 245 591
- US-A- 4 520 781
- US-A- 4 872 436

## Description

### TECHNICAL FIELD

The present invention relates to an ignition timing control method and system for an internal combustion engine, and particularly to an ignition timing control method and system for an internal combustion engine in which a so-called "predictive ignition timing control" is conducted.

### BACKGROUND OF THE INVENTION

Conventionally, some of the two-stroke engines, in which a cycle of induction, compression, expansion and exhaust is completed in a single rotation of the crankshaft and accordingly an ignition takes place every single rotation of the engine, adopt a DC-CDI (Direct Current Capacitor Discharge Ignition) system. The DC-CDI systems comprise a DC-DC converter to raise the supply voltage so as to obtain a voltage required for a CDI-type ignition unit. Such DC-CDI systems are used for example in motorcycles. In order to precisely control the ignition timing, the DC-CDI systems typically comprise a CPU for digitally controlling the ignition timing. Such a DC-CDI system can be called a digitized DC-CDI system.

In the digitized DC-CDI systems, a so-called predictive ignition timing control is often conducted where a first pulse that is generated from a pulser coil at a predetermined angle before the top dead center of the engine is used as a reference in determining the ignition timing, and the difference between the reference point and the ignition point is converted into a time computed on the basis of the rotation period with an assumption that the engine is rotating at a constant rate, and the ignition is effected at the computed time.

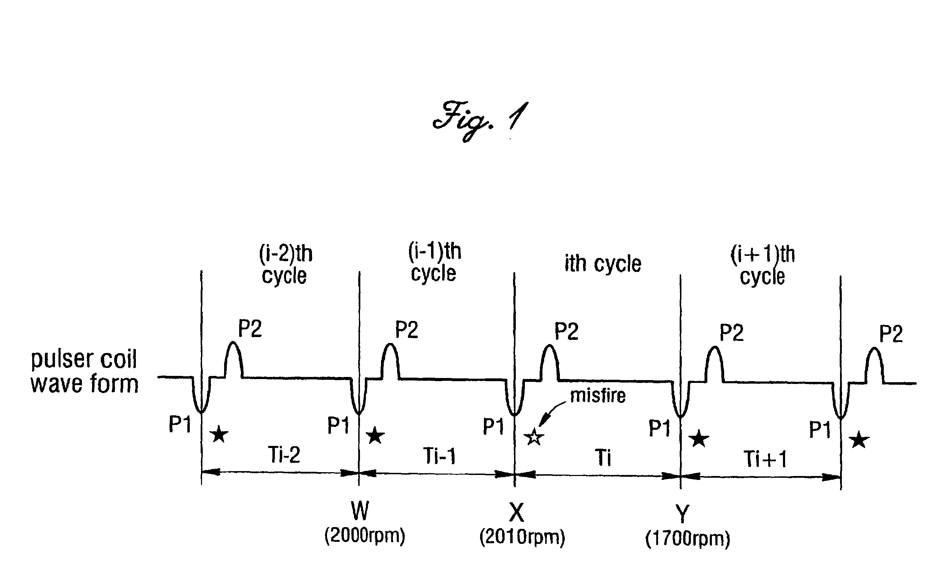

In the following, a typical conventional predictive ignition timing control is explained in detail with reference to the timing diagram of Figure 1. The timing diagram of Figure 1 schematically shows the output waveform from the pulser coil with respect to time. As shown, two consecutive negative pulses (or first pulses) P1 from the pulser coil define an engine rotation cycle. Typically, the engine speed is computed from the time period T between two consecutive negative pulses P1. For example, at point W, an engine speed of 2000 rpm can be obtained from the time period Tᵢ₋₂ of (i-2)th cycle and at point X an engine speed of 2010 rpm can be obtained from the time period Tᵢ₋₁ of (i-1)th cycle. In the predictive ignition timing control, it is assumed that the engine speed is approximately the same between adjacent engine rotation cycles. In other words, the engine speed computed in one engine rotation cycle is used in determining the ignition timing in the next engine rotation cycle. For example, during the (i-1)th cycle, the ignition timing in the i th cycle is computed using the engine speed of 2000 rpm that is obtained in the (i-1)th cycle (after the point W). Such predictive ignition timing control has an advantage that adequate computation time is ensured for computing an optimum ignition timing associated with engine speed. Further, since the engine speed calculation is made based on the signal pulse (e.g., P1) that is generated once per each engine rotation cycle at a predetermined crank angle, the reluctor is required to have only one protrusion for generating the signal pulse and thus can be manufactured at a low cost.

However, in the case where intermittent ignitions (or misfires) are caused at such a time immediately after the engine is started when the engine temperature is low, a problem may arise in the conventional predictive ignition timing control. Suppose that a misfire occurs in the i th engine rotation cycle in Figure 1 as shown by 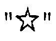 in the drawing. Due to the misfire, the engine rotation speed decreases in the i th cycle. Accordingly, at point Y, the engine speed computed based on the time period Ti of the i th cycle decreases to 1700 rpm for example. However, as explained above, according to the conventional predictive ignition timing control, the predicted ignition timing for the (i+1)th cycle is computed during the i th cycle using the engine speed of 2010 rpm that is obtained from the time period Tᵢ₋₁ of the (i-1)th cycle. Therefore, the abrupt decrease in the rotation speed resulting from the misfire in i th cycle will cause an excessively over-advanced ignition in the (i+1) th cycle. This would lead to abnormal engine oscillation such as knocking and considerably deteriorate the smoothness of engine rotation. Particularly in a low engine speed range near the idle speed where the engine rotational energy is small, the influence of untimely ignition on the engine rotation can be significant. These phenomena are prominent especially in small cylinder-volume engines having small engine inertial mass.

In order to eliminate such deterioration of the smoothness of engine rotation due to untimely ignition resulting from engine speed fluctuation, Japanese Patent Application Laid-Open (Kokai) No. 9-126105 has disclosed to effect ignition at a fixed ignition timing in a low engine speed range using a signal pulse from the pulser coil, and conduct predictive ignition timing control only in a middle and high engine speed ranges.

However, it will be of course preferable if the predictive ignition timing control (and hence optimization of the ignition timing) in the low engine speed range can be achieved without causing the above described "over-advanced ignition timing" problem. Further, in the fixed ignition timing approach as disclosed in No. 9-126105, it may be necessary to adjust the fixed ignition timing (or the generation point of the signal pulse from the pulser coil) depending on the vehicle type, usage or the like. In order to change the generation point of the signal pulse from the pulser coil, however, it may be required to select different size and/or position of the reluctor, which will lead to lower production efficiency and higher cost.

Document US 4 872 436 discloses a predictive ignition timing control for stabilizing the idling speed of the engine including a run-down timer and a fixed ignition timing approach.

### BRIEF SUMMARY OF THE INVENTION

In view of such problems of the prior art, a primary object of the present invention is to provide an ignition timing control method and system for an internal combustion engine that can conduct predictive ignition timing control throughout the engine speed range and can prevent abnormal engine oscillation even if a misfire takes place in a low engine speed range.

A second object of the present invention is to provide such an ignition control method and system that can be used for various vehicle types and usage without changing the size and/or position of the reluctor so long as an identical engine is used.

A third object of the present invention is to provide such an ignition control method in a simple and cost-effective manner.

According to one aspect of the present invention, these and other objects can be accomplished by providing a method for controlling an ignition timing for an internal combustion engine, comprising the steps of: generating a first signal pulse (P1) at each first predetermined crank angle of the internal combustion engine, adjacent two first signal pulses (P1) defining an engine rotation cycle; computing a current engine speed; computing a next predicted ignition timing according to the computed current engine speed; and generating an ignition signal according to a current predicted ignition timing that has been computed in a previous engine rotation cycle; characterized in that the ignition signal generating step comprises the steps of: comparing the computed current engine speed with a reference engine speed; generating the ignition signal at the current predicted ignition timing if the computed current engine speed is greater than the reference engine speed; and generating the ignition signal at a timing which is a later one of the current predicted ignition timing (A, B) and a predetermined ignition timing (C) if the engine speed is not greater than the reference engine speed. Preferably, the predicted ignition timing (A, B) is determined with respect to the signal pulse (P1) generated at each first predetermined crank angle, and the reference engine speed defines a boundary between a low engine speed range and a middle engine speed range.

In this way, since the ignition earlier than the predetermined ignition timing is prevented in a low engine speed range, abnormal engine oscillation due to excessively over-advance ignition timing can be prevented in case of a misfire. Without a misfire, the ignition is effected at the predicted ignition timing associated with the engine speed and thus optimum ignition timing control is achieved even in the low engine speed range, contributing to less energy consumption and less polluted exhaust. Further, the predetermined ignition timing is only required to be such an ignition timing that will not deteriorate the smoothness of engine rotation in case of a misfire, and thus may be substantially the same for various vehicle types or usage as long as the engine is identical. Therefore, the position and/or size of the reluctor for generating signal pulses need not be changed depending on the vehicle type or usage.

In view of allowing optimum ignition timing to be obtained throughout the low engine speed range, it is preferable if the predetermined ignition timing (C) is earlier than an optimum ignition timing for each engine speed within the low engine speed range. In the case where the optimum ignition timing is determined such that it advances with the engine speed in the low engine speed range, the predetermined ignition timing (C) can be set approximately equal to an optimum ignition timing for the reference engine speed that defines the boundary between the low and middle engine speed ranges.

Typically, the method further comprises the step of generating a second signal pulse (P2) at each second predetermined crank angle that is later than the first predetermined crank angle, and in such a case, the predetermined ignition timing (C) can be conveniently determined by the second signal pulse (P2). In the step of computing a current engine speed, it may be possible that the current engine speed is computed according to proceeding two first signal pulses (P1) or according to proceeding two second signal pulses (P2). It may also be possible to compute the current engine speed by using both the first and second signal pulses.

According to another aspect of the present invention, an ignition timing control system for an internal combustion engine is provided where the ignition timing control system comprises: a pulse generator for generating a signal pulse (P1) at each first predetermined crank angle of the internal combustion engine, adjacent two first signal pulses (P1) defining an engine rotation cycle; means for computing a current engine speed; means for computing a next predicted ignition timing according to the computed current engine speed; and ignition signal generation means for generating an ignition signal according to a current predicted ignition timing that has been computed in a previous engine rotation cycle, characterized in that the ignition signal generation means compares the computed current engine speed with a reference engine speed, and if the engine speed is greater than the reference engine speed, the ignition signal generation means generates the ignition signal at the current predicted ignition timing while if the engine speed is not larger than the reference engine speed, the ignition signal generation means generates the ignition timing at a timing which is a later one of the current predicted ignition timing (A, B) and a predetermined ignition timing (C).

Other and further objects, features and advantages of the invention will appear more fully from the following description.

### BRIEF DESCRIPTION OF THE DRAWINGS

Now the present invention is described in the following with reference to the appended drawings, in which:
Figure 1 is a timing diagram for explaining the process of conventional predictive ignition timing control;
Figure 2 is a flowchart showing a way of controlling the ignition timing according to the present invention; and
Figure 3 is a diagram for explaining the way of controlling the ignition timing according to the present invention.

### DETAILED DESCRIPTION OF THE PREFERRED EMBODIMENTS

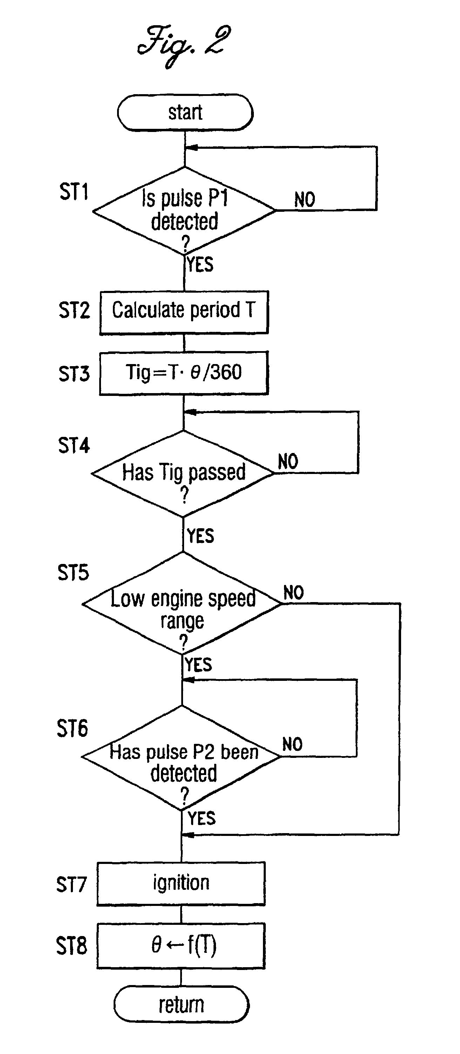

Figure 2 is a flowchart showing a way of controlling the ignition timing according to an embodiment of the present invention. As in the conventional predictive ignition timing control explained above with reference to Figure 1, the rotation angle of the crankshaft is detected by the pulser coil. The pulser waveform from the pulser coil comprises a first pulse P1 and a second pulse P2, the second pulse P2 being generated at a predetermined rotation angle with respect to the first pulse P1. The first pulse P1 is used as a reference in determining the ignition timing.

First, in step ST1, it is determined if the first pulse P1 is generated or not, and if the first pulse P1 is not generated, first step ST1 is repeated and if the first pulse P1 is generated, the process goes to second step ST2. In second step ST2, a time period T between preceding two pulses (or between the previous first pulse P1 and the current first pulse P1) is computed. It should be noted that the computed time period T can represent a current engine speed. The time period T can be defined as the interval between the peaks of the two preceding pulses P1. In other embodiments, however, the time period T may be defined as the interval between the rising edges or falling edges of the preceding two pulses. Further it should be noted that the current engine speed may be computed by using two positive signal pulses P2 instead of the pulses P1.

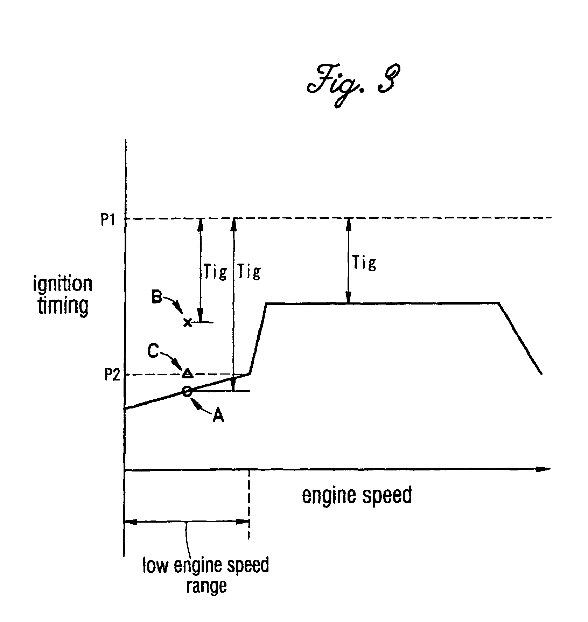

In third step ST3, using the time period T computed in second step ST2 and a current predicted advance angle θ , a predicted ignition timing Tig shown in Figure 3 is computed with respect to the first pulse P1 (Tig = T·θ/360), wherein the current predicted advance angle θ had been obtained in the previous cycle by addressing an advance angle map, which is not shown but is predefined based on the particular engine characteristics, by using the time period T computed in step ST2 of the previous cycle. Then, the process proceeds to fourth step ST4 in which it is determined if the time period corresponding to the above predicted ignition timing Tig has passed, and if this is the case the process goes to fifth step ST5.

In step ST5, it is determined from the time period T if the current engine speed is within the low engine speed range. The low engine speed range can be a range that comprises the engine idle speed and its neighborhood and in that untimely ignition timings could cause considerable engine speed fluctuation. It should be noted that such a range can vary depending on engine types and thus is not particularly limited here.

If in fifth step ST5 it is determined that the engine speed is within the low engine speed range, the process proceeds to sixth step ST6 in which it is determined if the second pulse P2 has been generated or not. If the second pulse P2 has not been generated, sixth step ST6 is repeated until the second pulse P2 is detected. If the second pulse P2 has been generated, the process goes to seventh step ST7. If in fifth step ST5 it is determined that the engine speed is not within the low engine speed range (i.e., is in the middle or high engine speed range), the process also goes to seventh step ST7. In seventh step ST7, ignition is effected.

In step ST8 following step ST7, a next predicted ignition timing (advance angle) θ is computed by using the time period T calculated at step ST2 in the current cycle.

Thus, as a rule, ignition is effected according to the predicted ignition timing, and only when in the low engine speed range the predicted ignition timing is advanced than the predetermined ignition timing defined by the second pulse P2, the ignition at the predicted ignition timing is inhibited. This is clearly illustrated in Figure 3 in that the solid line represents optimum ignition timing for various engine speeds. In Figure 3, the generation point of the second pulse P2 serving as the fixed ignition timing is preferably set at an optimum advance angle for the engine speed residing at the boundary between the low and middle engine speed ranges. As seen, in the low engine speed range, the predicted ignition timing Tig should refer to a point of time later than the generation of the second pulse P2, and if this is met (e.g. as indicated by the point A in the drawing), the ignition takes place at the predicted ignition timing Tig. On the other hand, if the predicted ignition timing Tig is earlier than the generation of the second pulse P2 (e.g., as indicated by the point B in the drawing), the ignition takes place not at the predicted ignition timing Tig but at the point of generation of the second pulse P2 (as indicated by the point C in the drawing). In the middle or high engine speed range, the ignition is effected at the predicted ignition timing Tig without waiting for the generation of the second pulse P2 (i.e., without passing through step ST6) as described above.

Thus, the generation point of the second pulse P2 is used as a fixed ignition timing, and when the computed predicted ignition timing Tig is earlier (or advanced) than the fixed ignition timing (P2), ignition is effected at the fixed ignition timing so that excessively over-advanced ignition timing is prevented, which otherwise could result from abrupt decrease in the engine rotation speed due to misfires or other reasons and would lead to abnormal oscillation of the engine. When the computed predicted ignition timing Tig is later than the fixed ignition timing (P2), ignition is effected at the predicted ignition timing Tig and an optimized ignition in the low engine speed range can be effectively achieved. It should be noted that although in the shown embodiment the generation point of the second pulse P2 was preferably set at an optimum advance angle for the engine speed residing at the boundary between the low and middle engine speed ranges, the generation point of the second pulse P2 can be adjusted within a range between the first pulse P1 and the optimum ignition timing in the low engine speed range.

As described above, according to the present invention, even when a misfire is caused and the engine rotation speed decreases abruptly, the ignition timing in the low engine speed range is prevented from advancing beyond the fixed ignition timing and thus, the considerable deterioration of the smoothness of engine rotation due to excessively over-advanced ignition can be prevented. Without a misfire, the ignition is effected at the computed predicted ignition timing and thus it is possible to conduct digitally controlled ignition at the optimum ignition timing even in the low engine speed range, contributing to less energy consumption and less polluted exhaust. Further, the fixed ignition timing is only required to be such an ignition timing that will not deteriorate the smoothness of engine rotation in case of a misfire, and thus may be substantially the same for various vehicle types or usage so long as the engine is identical. Therefore, the position and/or size of the reluctor for generating signal pulses need not be changed depending on the vehicle type or usage. The required length of the reluctor may be relatively short, which will lead to more efficient production and lower cost.

The present invention has been described in terms of preferred embodiments thereof. These embodiments were shown for illustrative purposes and should not be recognized as restricting the present invention. It will be obvious to a person skilled in the art that various alterations and modifications are possible without departing from the scope of the present invention which is set forth in the appended claims.

## Claims

1. A method for controlling an ignition timing for an internal combustion engine, comprising the steps of:
generating a first signal pulse (P1) at each first predetermined crank angle of the internal combustion engine, adjacent two first signal pulses (P1) defining an engine rotation cycle;
computing a current engine speed;
computing a next predicted ignition timing according to the computed current engine speed; and
generating an ignition signal according to a current predicted ignition timing that has been computed in a previous engine rotation cycle;
**characterized in that**:
the ignition signal generating step comprises the steps of:
comparing the computed current engine speed with a reference engine speed;
generating the ignition signal at the current predicted ignition timing if the computed current engine speed is greater than the reference engine speed; and
generating the ignition signal at a timing which is a later one of the current predicted ignition timing (A, B) and a predetermined ignition timing (C) if the engine speed is not greater than the reference engine speed.

2. A method according to claim 1, wherein the predicted ignition timing (A, B) is determined with respect to the signal pulse (P1) generated at each first predetermined crank angle.

3. A method according to claim 2, wherein the reference engine speed defines a boundary between a low engine speed range and a middle engine speed range.

4. A method according to claim 3, wherein the predetermined ignition timing (C) is earlier than an optimum ignition timing for each engine speed within the low engine speed range.

5. A method according to claim 4, wherein the predetermined ignition timing (C) is approximately equal to an optimum ignition timing for the reference engine speed.

6. A method according to claim 4, further comprising the step of generating a second signal pulse (P2) at each second predetermined crank angle that is later than the first predetermined crank angle, wherein the predetermined ignition timing (C) is determined by the second signal pulse (P2).

7. A method according to claim 1, wherein the step of computing a current engine speed comprises the step of computing the current engine speed according to proceeding two first signal pulses (P1).

8. A method according to claim 1, further comprising the step of generating a second signal pulse (P2) at each second predetermined crank angle that is later than the first predetermined crank angle, wherein the step of computing a current engine speed comprises the step of computing the current engine speed according to proceeding two second signal pulses (P2).

9. An ignition timing control system for an internal combustion engine, comprising:
a pulse generator for generating a signal pulse (P1) at each first predetermined crank angle of the internal combustion engine, adjacent two first signal pulses (P1) defining an engine rotation cycle;
means for computing a current engine speed;
means for computing a next predicted ignition timing according to the computed current engine speed; and
ignition signal generation means for generating an ignition signal according to a current predicted ignition timing that has been computed in a previous engine rotation cycle,
**characterized in that**:
the ignition signal generation means compares the computed current engine speed with a reference engine speed, and if the engine speed is greater than the reference engine speed, the ignition signal generation means generates the ignition signal at the current predicted ignition timing while if the engine speed is not larger than the reference engine speed, the ignition signal generation means generates the ignition timing at a timing which is a later one of the current predicted ignition timing (A, B) and a predetermined ignition timing (C).

## Patentansprüche

1. Verfahren zur Steuerung eines Zündzeitpunktes einer Verbrennungskraftmaschine umfassend die Schritte:
Erzeugen eines ersten Signalimpulses (P1) bei jedem ersten vorbestimmten Winkel der Kurbelwelle einer Verbrennungskraftmaschine, neben zwei ersten Signalimpulsen (P1), die einen Maschinenrotationszyklus definieren;
Berechnung einer momentanen Maschinendrehzahl,
Berechnung eines nächsten vorhergesagten Zündzeitpunkts gemäß der berechneten momentanen Maschinendrehzahl und
Erzeugung eines Zündsignals gemäß einem momentan vorhergesagten Zündzeitpunkt, der in einem vorangegangenen Maschinenrotationszyklus berechnet wurde,
**dadurch gekennzeichnet,**
**dass** der Schritt Erzeugen eines Zündsignals die Schritte umfasst:
Vergleichen der berechneten momentanen Maschinendrehzahl mit einer Referenzmaschinendrehzahl,
Erzeugung des Zündsignals zu dem momentan vorhergesagten Zündzeitpunkt, falls die berechnete momentane Maschinendrehzahl größer ist als die Referenzmaschinendrehzahl und
Erzeugung des Zündsignals zu einem Zeitpunkt, der später als der momentan vorhergesagte Zündzeitpunkt (A, B) und eines vorbestimmten Zündzeitpunkts (C) liegt, falls die Maschinendrehzahl nicht größer ist, als die Referenzmaschinendrehzahl ist.

2. Verfahren nach Anspruch 1, wobei der vorhergesagte Zündzeitpunkt (A, B) bestimmt wird in Bezug auf den Signalimpuls (P1), der erzeugt wird bei jedem ersten vorbestimmten Winkel der Kurbelwelle.

3. Verfahren nach Anspruch 2, wobei die Referenzmaschinendrehzahl eine Grenze zwischen einem niedrigen Maschinendrehzahlbereich und einem mittleren Maschinendrehzahlbereich definiert.

4. Verfahren nach Anspruch 3, wobei der vorbestimmte Zündzeitpunkt (C) früher als ein optimaler Zündzeitpunkt für alle Maschinendrehzahlen innerhalb des niedrigen Maschinendrehzahlbereichs liegt.

5. Verfahren nach Anspruch 4, wobei der vorbestimmte Zündzeitpunkt (C) näherungsweise gleich zu einem optimalen Zündzeitpunkt für die Referenzmaschinendrehzahl liegt.

6. Verfahren nach Anspruch 4 weiter umfassend den Schritt Erzeugen eines zweiten Signalimpulses (P2) zu jedem zweiten vorbestimmten Winkel der Kurbelwelle, der hinter dem ersten vorbestimmten Winkel der Kurbelwelle liegt, wobei der vorherbestimmte Zündzeitpunkt (C) bestimmt wird durch den zweiten Signalimpuls (P2).

7. Verfahren nach Anspruch 1, wobei der Schritt Berechnen einer momentan Maschinendrehzahl den Schritt umfasst Berechnen der momentanen Maschinendrehzahl gemäß zwei vorangegangener erster Signalimpulse (P1).

8. Verfahren nach Anspruch 1, weiter umfassend den Schritt Erzeugen eines zweiten Signalimpulses (P2) zu jedem zweiten vorbestimmten Winkel der Kurbelwelle der hinter einem ersten vorbestimmten Winkel der Kurbelwelle liegt, wobei der Schritt Berechnen einer momentanen Maschinendrehzahl den Schritt Berechnen der momentanen Maschinendrehzahl gemäß zwei vorangegangener zweiter Signalimpulse (P2) umfasst.

9. Zündzeitpunktsteuersystem für eine Brennkraftmaschine umfassend:
einen Impulsgenerator zur Erzeugung eines Signalimpulses (P1) zu jedem ersten vorbestimmten Winkel der Kurbelwelle der Brennkraftmaschine, benachbart zu zwei ersten Signalimpulsen (P1), die einen Maschinenrotationszyklus definieren,
Mittel zur Berechnung einer momentanen Maschinendrehzahl,
Mittel zur Berechnung eines nächsten vorhergesagten Zündzeitpunkts gemäß der berechneten momentan Maschinendrehzahl und
Zündsignalerzeugungsmittel zur Erzeugung eines Zündsignals gemäß eines momentan vorhergesagten Zündzeitpunkts, der in einem vorhergegangenen Maschinenrotationszyklus berechnet wurde, **dadurch gekennzeichnet,**
**dass** das Zündsignalerzeugungsmittel die berechnete momentane Maschinendrehzahl mit einer Referenzmaschinendrehzahl vergleicht und falls die Maschinendrehzahl größer ist als die Referenzmaschinendrehzahl, das Zündsignalerzeugungsmittel ein Zündsignal zu dem momentan vorhergesagten Zündzeitpunkt erzeugt, wobei falls die Maschinendrehzahl nicht größer als die Referenzmaschinendrehzahl ist, das Zündsignalerzeugungsmittel das Zündsignal zu einem Zeitpunkt, der nach einem momentan vorhergesagten Zündzeitpunkt (A, B) und einem vorbestimmten Zündzeitpunkt (C) liegt, erzeugt.

## Revendications

1. Procédé pour la commande de l'avance à l'allumage pour un moteur à combustion interne, comprenant les étapes consistant à :
générer un premier signal sous forme d'impulsion (P1) à chaque premier angle de manivelle prédéterminé du moteur à combustion interne, en position adjacente aux deux premiers signaux sous forme d'impulsions (P1) définissant un cycle de rotation du moteur ;
calculer une vitesse du moteur en vigueur ;
calculer une avance à l'allumage prédite suivante en fonction de la vitesse en vigueur du moteur calculée ; et
générer un signal d'allumage en fonction d'une avance à l'allumage prédite en vigueur qui a été calculée dans un cycle antérieur de rotation du moteur ;
**caractérisé en ce que**
l'étape de génération du signal d'allumage comprend les étapes consistant à :
comparer la vitesse du moteur en vigueur calculée à une vitesse du moteur de référence ;
générer le signal d'allumage à l'avance à l'allumage prédite en vigueur lorsque la vitesse du moteur en vigueur calculée est supérieure à la vitesse du moteur de référence ; et
générer le signal d'allumage à une avance qui est ultérieure à l'avance à l'allumage prédite en vigueur (A, B) et à l'avance à l'allumage prédéterminée (C) lorsque la vitesse du moteur n'est pas supérieure à la vitesse du moteur de référence.

2. Procédé selon la revendication 1, dans lequel l'avance à l'allumage prédite (A, B) est déterminée par rapport au signal sous forme d'impulsion (P1) généré à chaque premier angle de manivelle prédéterminé.

3. Procédé selon la revendication 2, dans lequel la vitesse du moteur de référence définit une limite entre une gamme de petites vitesses du moteur et une gamme de vitesses moyennes du moteur.

4. Procédé selon la revendication 3, dans lequel l'avance à l'allumage prédéterminée (C) est antérieure à une avance à l'allumage optimale pour chaque vitesse du moteur dans la gamme dé petites vitesses du moteur.

5. Procédé selon la revendication 4, dans lequel l'avance à l'allumage prédéterminée (C) est approximativement égale à une avance à l'allumage optimale pour la vitesse du moteur de référence.

6. Procédé selon la revendication 4, comprenant en outre l'étape consistant à générer un deuxième signal sous forme d'impulsion (P2) à chaque deuxième angle de manivelle prédéterminé qui est ultérieur au premier angle de manivelle prédéterminé, dans lequel l'avance à l'allumage prédéterminée (C) est déterminée par le deuxième signal sous forme d'impulsion (P2).

7. Procédé selon la revendication 1, dans lequel l'étape consistant à calculer une vitesse du moteur en vigueur comprend l'étape consistant à calculer la vitesse du moteur en vigueur en fonction du traitement de deux premiers signaux sous forme d'impulsions (P1).

8. Procédé selon la revendication 1, comprenant en outre l'étape consistant à générer un deuxième signal sous forme d'impulsion (P2) à chaque deuxième angle de manivelle prédéterminé qui est ultérieur au premier angle de manivelle prédéterminé, dans lequel l'étape consistant à calculer une vitesse du moteur en vigueur comprend l'étape consistant à calculer la vitesse du moteur en vigueur en fonction du traitement de deux deuxièmes signaux sous forme d'impulsions (P2).

9. Système de commande de l'avance à l'allumage pour un moteur à combustion interne, comprenant :
un générateur d'impulsions pour générer un signal sous forme d'impulsion (P1) à chaque premier angle de manivelle prédéterminé du moteur à combustion interne, en position adjacente aux deux premiers signaux sous forme d'impulsions (P1) définissant un cycle de rotation du moteur ;
un moyen pour calculer une vitesse du moteur en vigueur ;
un moyen pour calculer une avance à l'allumage prédite suivante en fonction de la vitesse en vigueur du moteur calculée ; et
un moyen pour générer un signal d'allumage en fonction d'une avance à l'allumage prédite en vigueur qui a été calculée dans un cycle antérieur de rotation du moteur ;
**caractérisé en ce que**
le moyen pour générer un signal d'allumage compare la vitesse du moteur en vigueur calculée à une vitesse du moteur de référence, et lorsque la vitesse du moteur en vigueur calculée est supérieure à la vitesse du moteur de référence le moyen pour générer un signal d'allumage génère le signal d'allumage à l'avance à l'allumage prédite en vigueur, tandis que lorsque la vitesse du moteur n'est pas supérieure à la vitesse du moteur de référence, le moyen pour générer un signal d'allumage génère le signal d'allumage à une avance qui est ultérieure à l'avance à l'allumage prédite en vigueur (A, B) et à l'avance à l'allumage prédéterminée (C).
